# EUROPEAN PATENT APPLICATION

(11) **EP 4 684 993 A2**
(43) Date of publication of application: **28.01.2026**
(21) Application number: 25221980.3
(22) Date of filing: 22.10.2021
(51) Int. Cl.: B60K 1/00

(54) **BATTERY PACK AND VEHICLE**

(30) Priority: 23.10.2020 KR 20200138666
(62) Divisional of application: 21883369.7
(71) Applicant: LG Energy Solution, Ltd., Seoul 07335 (KR)
(72) Inventor: JEON, Bo-Ra, 34122 Daejeon (KR); LEE, Hyoung-Suk, 34122 Daejeon (KR); KIM, Dong-Hyun, 641-711 Gyeongsangnam-do (KR); HONG, Soon-Chang, 34122 Daejeon (KR)
(74) Representative: Plasseraud IP

(57) **Abstract**

Provided are a battery pack with increased space efficiency of an installation site and a vehicle including the battery pack. The battery pack includes at least one battery module; and a cooling unit having a refrigerant passage configured to allow a refrigerant to flow therein, having a plate shape such that the at least one battery module is mounted thereon, and including at least one of a convex part in which a part on which the battery module is not mounted is convex in an upper direction, and a concave part in which another part on which the battery module is not mounted is concave in a lower direction.

## Description

### TECHNICAL FIELD

The present disclosure relates to a battery pack and a vehicle including the battery pack, and more particularly to, a battery pack with increased space efficiency of an installation site and a vehicle including the battery pack.

The present application claims priority to Korean Patent Application No. 10-2020-0138666 filed on October 23, 2020 in the Republic of Korea, the disclosures of which are incorporated herein by reference.

### BACKGROUND ART

Recently, as the demand for portable electronic products such as laptops, video cameras, mobile phones, etc. has rapidly increased, and the development of electric vehicles, energy storage batteries, robots, satellites, etc. begins in earnest, research on high-performance secondary batteries that are repeatedly chargeable and dischargeable is being actively researched.

Currently commercialized secondary batteries include nickel cadmium batteries, nickel hydrogen batteries, nickel zinc batteries, lithium secondary batteries, etc. Among these secondary batteries, because the lithium secondary batteries have almost no memory effect compared to nickel-based secondary batteries, the lithium secondary batteries have been spotlighted owing to advantages of free charging and discharging, a very low self-discharge rate, and a high energy density.

Such a lithium secondary battery mainly uses lithium-based oxides and carbon materials as positive electrode active materials and negative electrode active materials, respectively. The lithium secondary battery also includes an electrode assembly in which a positive electrode plate and a negative electrode plate on which a positive electrode active material and a negative electrode active material are respectively coated are arranged with a separator interposed therebetween, and a sheath material, that is, a battery case, that seals and accommodates the assembly together with an electrolyte solution. A plurality of lithium secondary batteries may be included in a battery pack.

Recently, the demand for a large capacity battery pack applied to an electric vehicle, etc. is increasing. While such a battery pack needs to be mounted in a narrow internal space of a vehicle, various internal components, such as an electric motor, a power transmission device, etc., are mounted on the vehicle, in addition to the battery pack, and thus it is not easy to secure a sufficient storage space capable of accommodating the battery pack.

Moreover, when a round-shaped component exists at the installation site where the battery pack is mounted, or when an installation floor has a convex shape, since a large amount of a dead space (an empty space) is generated between the battery pack of the related art and the storage space, there is a problem that space efficiency of the vehicle deteriorates.

### DISCLOSURE

### Technical Problem

The present disclosure is designed to solve the problems of the related art, and therefore the present disclosure is directed to providing a battery pack with increased space efficiency of an installation site and a vehicle including the battery pack.

These and other objects and advantages of the present disclosure may be understood from the following detailed description and will become more fully apparent from the exemplary embodiments of the present disclosure. Also, it will be easily understood that the objects and advantages of the present disclosure may be realized by the means shown in the appended claims and combinations thereof.

### Technical Solution

In one aspect of the present disclosure, there is provided a battery pack including at least one battery module; and a cooling unit having a refrigerant passage configured to allow a refrigerant to flow therein, having a plate shape such that the at least one battery module is mounted thereon, and including at least one of a convex part in which a part on which the battery module is not mounted is convex in an upper direction, and a concave part in which another part on which the battery module is not mounted is concave in a lower direction.

Also, the battery pack may further include an electric module configured to control charging and discharging of the battery module, and the electric module may be positioned to face at least one of the convex part and the concave part of the cooling unit, and may include at least one curved surface.

The battery pack may further include a heat transfer member having one side configured to be connected to the electric module and the other end in contact with the battery module, and having at least one curved surface to face at least one of the convex part and the concave part of the cooling unit.

Also, the heat transfer member may have an internal space configured to accommodate a cable electrically connecting the electric module and the battery module.

Moreover, the battery module may include a coupling portion extending from one side surface to an outer direction and having a first bolting hole formed therein, and the heat transfer member may include a support portion having a second bolting hole formed therein so as to be coupled to the coupling portion of the battery module.

The battery pack may further include a front plate coupled to a front end of the cooling unit; a rear plate coupled to a rear end of the cooling unit; a left plate coupled to a left end of the cooling unit; and a right plate coupled to a right end of the cooling unit.

Furthermore, the battery pack may further include a pillar member having both ends extending long from left to right of the electric module so as to support the left plate and the right plate, respectively, and having at least one curved surface to face at least one of the convex part and the concave part of the cooling unit.

Also, the pillar member may include an accommodation portion positioned on the convex part of the cooling unit and recessed in an upper direction so that the convex part is inserted; and a protrusion portion positioned on the concave portion of the cooling unit and protruding in a lower direction so as to be inserted into a recessed space of the concave part.

In another aspect of the present disclosure, there is provided a vehicle including the at least one battery pack.

The vehicle may further include a vehicle body configured to mount the battery pack thereon, and a part of the vehicle body may be configured to be inserted into a recessed space formed by the convex part of the cooling unit.

### Advantageous Effects

According to an aspect of the present disclosure, the present disclosure includes the cooling unit including the at least one convex part and the concave part, and thus, even when the round-shaped component exists at the installation site where the battery pack is mounted, or when the installation floor has the convex shape, it is possible to accommodate at least a part of the round-shaped component or the convex shape of the installation floor in the recessed space of the convex part of the cooling unit, thereby effectively increasing the space efficiency of the installation site. In particular, when the accommodation space of the battery pack is narrow, such as in the vehicle, it is possible to minimize the occurrence of a dead space (an empty space) that may be generated by the battery pack.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a perspective view schematically illustrating a battery pack according to an embodiment of the present disclosure.
FIG. 2 is an exploded perspective view schematically illustrating a battery pack according to an embodiment of the present disclosure.
FIG. 3 is a perspective view schematically illustrating a cooling unit of a battery pack according to an embodiment of the present disclosure.
FIG. 4 is a bottom perspective view schematically illustrating a cooling unit of a battery pack according to an embodiment of the present disclosure.
FIG. 5 is a vertical cross-sectional view schematically illustrating some components of a battery pack according to an embodiment of the present disclosure.
FIG. 6 is a partially enlarged view schematically illustrating a part of the battery pack of FIG. 5.
FIG. 7 is a perspective view schematically illustrating some components of a battery pack according to another embodiment of the present disclosure.
FIG. 8 is a perspective view schematically illustrating a pillar member of a battery pack according to another embodiment of the present disclosure.
FIG. 9 is a perspective view schematically illustrating a vehicle according to an embodiment of the present disclosure.
FIG. 10 is a partial front view schematically illustrating internal components of a vehicle according to an embodiment of the present disclosure.

### MODE FOR DISCLOSURE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

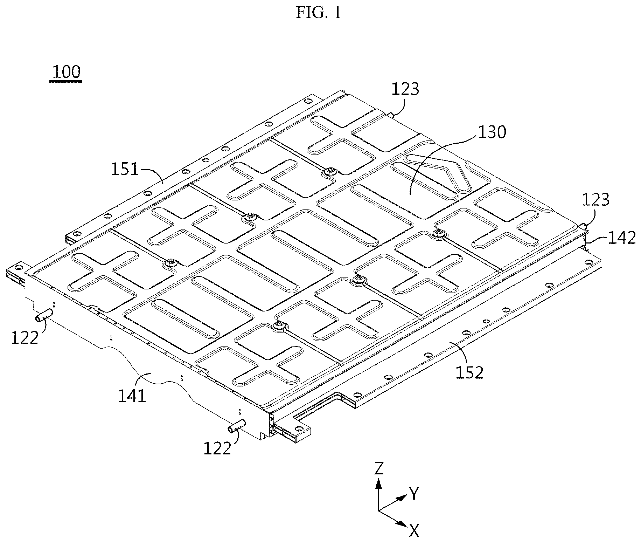

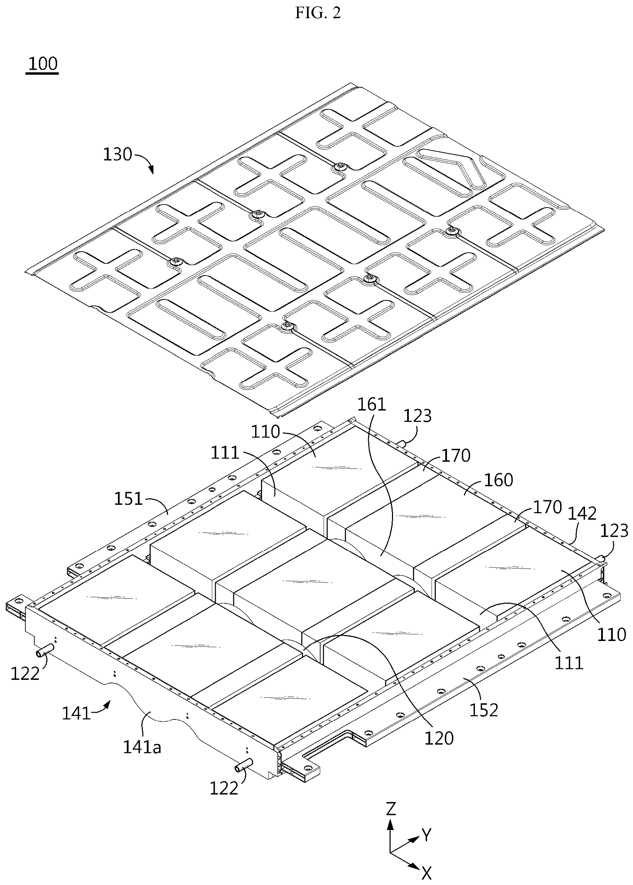

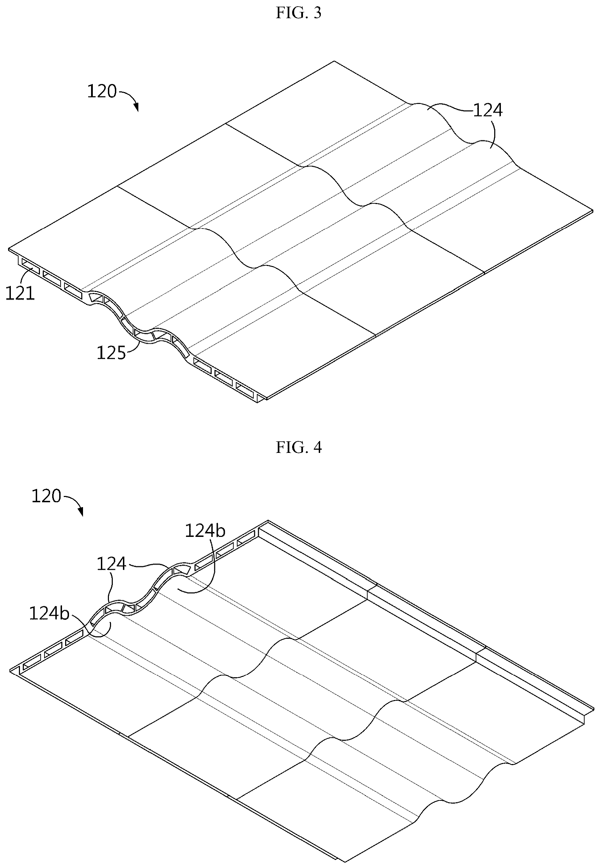

FIG. 1 is a perspective view schematically illustrating a battery pack according to an embodiment of the present disclosure. FIG. 2 is an exploded perspective view schematically illustrating a battery pack according to an embodiment of the present disclosure. FIG. 3 is a perspective view schematically illustrating a cooling unit of a battery pack according to an embodiment of the present disclosure. FIG. 4 is a bottom perspective view schematically illustrating a cooling unit of a battery pack according to an embodiment of the present disclosure.

Referring to FIGS. 1 to 4, a battery pack 100 according to an embodiment of the present disclosure includes at least one battery module 110 and a cooling unit 120.

Specifically, the battery module 110 may include a plurality of battery cells (not shown) and a module housing 111 that accommodates the plurality of battery cells therein. The battery cell may be a lithium secondary battery. The battery cell may be a pouch-type battery cell including an electrode assembly (not shown), an electrolyte (not shown), and a pouch accommodating the electrode assembly and the electrolyte therein. However, the battery module 100 according to the present disclosure is not limited to the pouch-type battery cell described above. For example, the battery cell may be a cylindrical battery cell. That is, various types of secondary batteries disclosed at the time of filing of the present disclosure may be employed as the battery cell.

The battery module 110 may include at least one bus bar (not shown) or a power cable (no shown) configured to electrically interconnect the plurality of battery cells. Specifically, the bus bar may include a conductive metal, for example, copper, aluminum, nickel, etc.

In addition, the module housing 111 may include an electrically insulating material. For example, the module housing 111 may be manufactured of a polyvinyl chloride material. The module housing 111 may include a space capable of accommodating the plurality of battery cells therein. The module housing 111 may have a box shape of a rectangular parallelepiped as a whole.

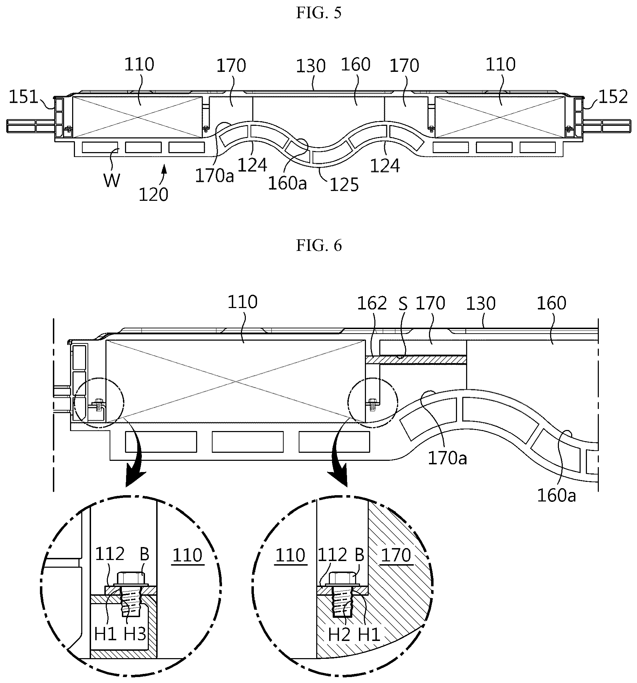

Moreover, the battery pack 100 of the present disclosure may include a sensing cable 162 (FIG. 6) electrically connected between the plurality of battery modules 110 and the electric module 160. The sensing cable may be configured to transmit an electrical signal to measure a current or a temperature of the battery module 110. Generally known configurations may be applied as detailed configurations of the battery module 110, and accordingly, detailed descriptions thereof are not provided herein. Furthermore, the battery pack 100 may further include a power cable (not shown) electrically connecting the plurality of battery modules.

In addition, the cooling unit 120 may be integrally manufactured through extrusion molding. In the present disclosure, the cooling unit 120 is integrally manufactured through extrusion molding, and thus, compared with the cooling unit 120 of the related art manufactured by bonding two members, airtightness may be increased, thereby preventing a refrigerant from leaking to the outside, and freely transforming the shape of the cooling unit 120 without being limited to a flat plate shape. The cooling unit 120 may include an injection port 122 into which the refrigerant is injected, and a discharge port 123 through which the refrigerant is discharged. The injection port 122 and the discharge port 123 may be configured to be communicatively connected with a refrigerant passage 121 formed inside the cooling unit 120.

The refrigerant passage 121 configured to allow the refrigerant to flow therein may be formed in the cooling unit 120. The refrigerant passage 121 may have a shape extending in a front and rear direction. The cooling unit 120 may include a partition wall W that partitions the refrigerant passage 121. The cooling unit 120 may be configured to allow the at least one battery module 110 to be mounted thereon.

Moreover, the cooling unit 120 may have a plate shape in which upper and lower surfaces are wider than a side surface. The cooling unit 120 may have a flat surface on which a part on which the battery module 110 is mounted extends in a horizontal direction.

In addition, the cooling unit 120 may include at least one of a convex part 124 and a concave part 125. The convex part 124 may be a part of the cooling unit 120 on which the battery module 110 is not mounted. The convex part 124 may have a convex shape in an upper direction. The concave part 125 may be another part of the cooling unit 120 on which the battery module 110 is not mounted. The concave part 125 may have a concave shape in a lower direction. For example, as shown in FIG. 3, two convex parts 124 in the center of the cooling unit 120 in a left and right direction (X-axis direction) and the concave part 125 between the two convex parts 124 may be provided.

Referring to FIG. 4, due to the shape of the convex part 124 of the cooling unit 120 that protrudes in the upper direction, a recessed space 124b may be formed in a lower portion of the convex part 124. Conversely, due to the concave shape of the concave part 125 in the lower direction, a lower portion of the concave part 125 may protrude in the lower direction.

Accordingly, according to such a configuration of the present disclosure, the present disclosure includes the cooling unit 120 including the at least one convex part 124 and the concave part 125, and thus, even when a round-shaped component exists at an installation site where the battery pack 100 is mounted, or when an installation floor has a convex shape, it is possible to accommodate at least a part of the round-shaped component or the convex shape of the installation floor in the recessed space 124b of the convex part of the cooling unit, thereby effectively increasing the space efficiency of the installation site. In particular, when an accommodation space of the battery pack 100 is narrow, such as in a vehicle, it is possible to minimize the occurrence of a dead space (an empty space) that may be generated by the battery pack 100.

FIG. 5 is a vertical cross-sectional view schematically illustrating some components of a battery pack according to an embodiment of the present disclosure.

Again, referring to FIG. 5 together with FIGS. 2 and 3, the battery pack 100 according to an embodiment of the present disclosure may further include an electric module 160. The electric module 160 may include a control element (not shown) to control charging and discharging of the battery module 110. The electric module 160 may include, as the control element, a BMS board, a relay, a fuse, a sensing cable, etc. A generally known configuration may be applied to the control element of the electric module 160. Accordingly, detailed descriptions of these control elements will be omitted.

In addition, the electric module 160 may include an electric housing 161 of electrical insulation configured to accommodate the control elements therein. The electric housing 161 may be positioned to face at least one of the convex part 124 and the concave part 125 of the cooling unit 120. The electric housing 161 may have a shape corresponding to at least one of the convex part 124 and the concave part 125. That is, the electric housing 161 may have at least one first curved surface 160a. For example, referring to FIG. 5, the electric module 160 may include a first curved surface 160a configured to face each of the two convex parts 124 and formed to be recessed in an inner direction of the body and a first curved surface 160a configured to face the concave part 125 and formed convexly from the body in an outer direction.

Therefore, according to such a configuration of the present disclosure, the present disclosure further includes the electric module 160 positioned to face at least one of the convex part 124 and the concave part 125 of the cooling unit 120, and including the at least one first curved surface 160a, thereby efficiently using the internal space of the battery pack 100. Moreover, in the present disclosure, heat generated in the electric module 160 may be transferred to the cooling unit 120 through a large conductive area of the first curved surface 160a, and thus the cooling efficiency of the electric module 160 may be effectively increased.

Meanwhile, again, referring to FIG. 5 together with FIGS. 2 and 3, the battery pack 100 according to an embodiment of the present disclosure may further include a heat transfer member 170. The heat transfer member 170 may include a material having excellent thermal conductivity in order to receive heat generated from the battery module 110 and transfer the heat to the cooling unit 120. For example, the heat transfer member 170 may include an aluminum alloy or stainless steel. An electrically insulating coating layer may be formed on an outer surface of the insulating member 170. For example, the electrically insulating coating layer may be a polymer resin.

The heat transfer member 170 may be configured such that one side thereof is connected to the electric module 160. For example, one surface of the heat transfer member 170 may be bonded to the electric module 160. Alternatively, the heat transfer member 170 may be connected to the electric module 160. The heat transfer member 170 may be integrally formed with the electric module 160. For example, as shown in FIG. 5, a left or right side surface of the heat transfer member 170 may be configured to be connected to a side surface of the electric module 160.

In addition, the heat transfer member 170 may be configured such that the other side thereof contacts the battery module 110. For example, as shown in FIG. 5, the left or right side surface of the heat transfer member 170 may be configured to contact the side surface of the battery module 110.

Furthermore, the heat transfer member 170 may be configured to face at least one of the convex part 124 and the concave part 125 of the cooling unit 120. The cooling unit 120 may include at least one second curved surface 170a. For example, as shown in FIG. 5, the heat transfer member 170 may include the second curved surface 170a configured to face the upper surface of the convex part 124.

Therefore, according to such a configuration of the present disclosure, the present disclosure further includes the heat transfer member 170 including the at least one second curved surface 170a, thereby effectively transferring the heat generated from the battery module 110 to the cooling unit 120. Accordingly, the battery pack 100 of the present disclosure may greatly increase the cooling efficiency.

FIG. 6 is a partially enlarged view schematically illustrating a part of the battery pack of FIG. 5.

Again, referring to FIG. 6 together with FIGS. 2, 3, and 5, the heat transfer member 170 may include an internal space S configured to accommodate a cable 162. For example, the cable 162 may be the sensing cable 162 configured to sense a current. The cable 162 may be configured to electrically connect a connection terminal of the electric module 160 and an external terminal of the battery module 110. That is, the heat transfer member may include a moving passage extending in the left and right direction through which the cable 162 may pass in the left and right direction (X-axis direction), and an inlet and an outlet which are partially perforated.

Therefore, according to such a configuration of the present disclosure, the present disclosure includes the internal space S capable of accommodating the cable 162, thereby facilitating an electrical connection between the battery module 110 and the electric module 160. Accordingly, the present disclosure may increase utilization of the internal space of the battery pack 100, and increase the manufacturing efficiency.

Meanwhile, referring to FIG. 6 again, the battery module 110 may include a coupling portion 112 extending from one side to an outer direction and having a first bolting hole H1 formed therein. The heat transfer member 170 may include a support portion 172 having a second bolting hole H2 including a screw thread formed therein so as to be coupled to the coupling portion 112 of the battery module 110. The first bolting hole H1 formed in the coupling portion 112 and the second bolting hole H2 formed in the support portion 172 may be configured to be communicatively connected with each other. That is, the first bolting hole H1 and the second bolting hole H2 may be configured through which one fastening bolt B may pass such that the coupling portion 112 and the support portion 172 are fastened to each other.

Therefore, according to such a configuration of the present disclosure, the present disclosure is configured to couple the coupling portion 112 provided in the battery module 110 and the support portion 172 provided in the heat transfer member 170 to each other through a bolt, and thus not only the battery module 110 may be stably fixed on the cooling unit 120 but also a state in which the heat transfer member 170 is in close contact with the battery module 110 may be stably maintained, thereby effectively increasing the cooling property of the module 110.

Meanwhile, referring to FIGS. 1 and 2 again, the battery pack 100 according to an embodiment of the present disclosure may include an upper cover 130, a front plate 141, a rear plate 142, a left plate 151, and a right plate 152.

The upper cover 130 may be positioned on upper portions of the plurality of battery modules 110. The upper cover 130 may have a plate shape extending in a horizontal direction to cover the upper portions of the plurality of battery modules 110. The upper cover 130 may be configured to be coupled to an upper end of each of the front plate 141, the rear plate 142, the left plate 151, and the right plate 152.

The front plate 141 may be configured to be coupled to a front end of the cooling unit 120. A part of the front plate 141 may have a shape corresponding to the convex part 124 and the concave part 125 of the front end of the cooling unit 120. That is, a lower surface of the front plate 141 may have a curved surface 141a formed to be recessed in the upper direction so as to correspond to the convex part 124. A lower surface of the front plate 141 may have a curved surface 141a protruding in the lower direction so as to correspond to the concave part 125.

In addition, the rear plate 142 may have a shape corresponding to the convex part 124 and the concave part 125 of a rear end of the cooling unit 120. That is, a lower surface of the rear plate 142 may have a curved surface 142a formed to be recessed in the upper direction so as to correspond to the convex part 124. A lower surface of the rear plate 142 may have a curved surface 142a protruding in the lower direction so as to correspond to the concave part 125.

Furthermore, the left plate 151 may be configured to be coupled to a left end of the cooling unit 120. A third bolting hole H3 configured to be coupled to the coupling portion 112 of the battery module 110 through a bolt may be formed in the left plate 151. The third bolting hole H3 may have a screw thread. The third bolting hole H3 may be configured to be communicatively connected with the first bolting hole H1 formed in the coupling portion 112 of the battery module 110.

In addition, the right plate 152 may be configured to be coupled to a right end of the cooling unit 120. The third bolting hole H3 configured to be coupled to the coupling portion 112 of the battery module 110 through a bolt may be formed in the right plate 152. The third bolting hole H3 may have a screw thread. The third bolting hole H3 may be configured to be communicatively connected with the first bolting hole H1 formed in the coupling portion 112 of the battery module 110.

Therefore, according to such a configuration of the present disclosure, in the present disclosure, the coupling portion 112 of the battery module 110 may be fixed to the left plate 151 or the right plate 152 in which the third bolting hole H3 is formed, and thus the battery module 110 may be stably mounted on the cooling unit 120. Accordingly, the battery pack 100 of the present disclosure may increase durability.

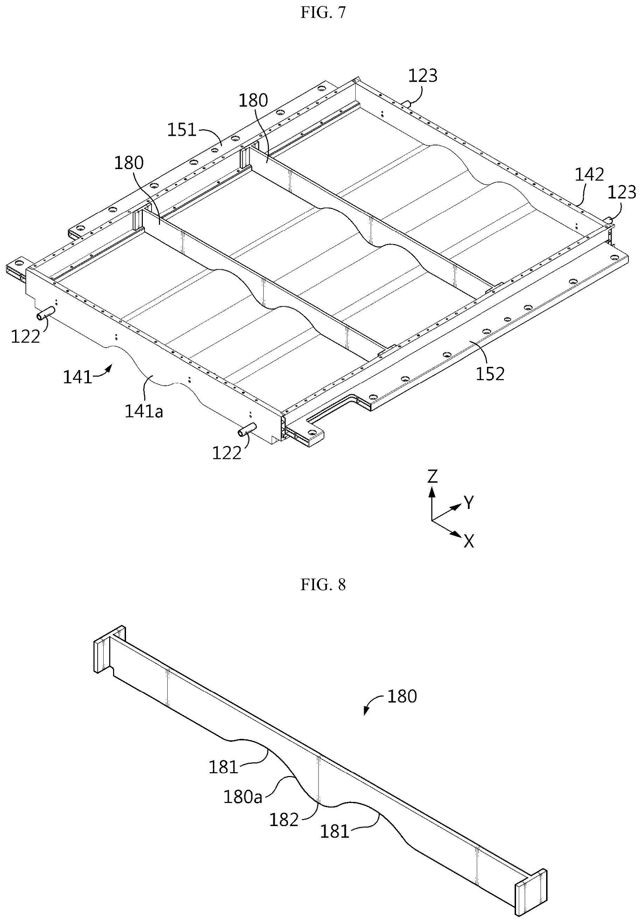

FIG. 7 is a perspective view schematically illustrating some components of a battery pack according to another embodiment of the present disclosure. FIG. 8 is a perspective view schematically illustrating a pillar member of a battery pack according to another embodiment of the present disclosure. For reference, the battery modules 110, the electric modules 160, and the heat transfer members 170 are omitted in FIG. 7 for convenience of illustration, but the battery pack according to another embodiment of the present disclosure may include, like the battery pack of FIG. 2, the battery modules 110, the electric modules 160, and the heat transfer members 170.

Referring to FIGS. 7 and 8, the battery pack 100 according to another embodiment of the present disclosure may further include a pillar member 180 when compared with the battery pack 100 according to the embodiment of FIG. 2. The pillar member 180 may be positioned between the two battery modules 110 arranged in a front and rear direction (Y-axis direction). For example, as shown in FIG. 7, the two pillar members 180 may be positioned between the battery modules 110 arranged in the front and rear direction.

In addition, both ends of the pillar member 180 in a longitudinal direction (X-axis direction) may be configured to support the left plate 151 and the right plate 152, respectively. The pillar member 180 may have a shape extending long from the left to the right of the electric module 160.

Furthermore, a lower portion of the pillar member 180 may be configured to face at least one of the convex part 124 and the concave part 125 of the cooling unit 120. That is, a lower surface of the pillar member 180 may be at least one third curved surface 180a having a shape corresponding to at least one of the convex part 124 and the concave part 125 of the cooling unit 120. The pillar member 180 may be steel having excellent mechanical rigidity or stainless steel.

In addition, the pillar member 180 may include an accommodation portion 181 and a protrusion portion 182. The accommodation portion 181 may be configured to be positioned on the convex part 124 of the cooling unit 120. The accommodation portion 181 may have a shape recessed in the upper direction so that the convex part 124 is inserted. The protrusion portion 182 may be positioned on the concave part 125 of the cooling unit 120. The protrusion portion 182 may have a shape protruding in the lower direction so as to be inserted into a space of the concave part 125 recessed in the lower direction.

Therefore, according to such a configuration of the present disclosure, the present disclosure further includes the pillar member 180 configured to face at least one of the convex part 124 and the concave part 125 of the cooling unit 120, thereby, when the battery pack 100 receives an external impact, protecting the battery module 110 mounted thereon due to the high mechanical rigidity of the pillar member 180. Accordingly, the battery pack 100 of the present disclosure may improve safety.

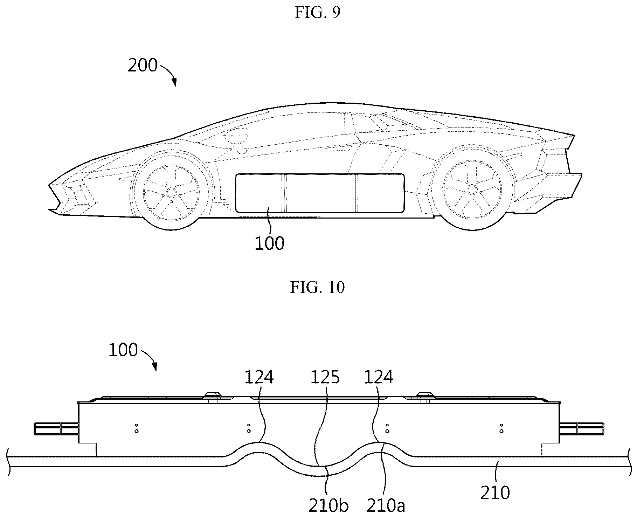

FIG. 9 is a perspective view schematically illustrating a vehicle according to an embodiment of the present disclosure.

Referring to FIG. 9, a vehicle 200 according to an embodiment of the present disclosure may include at least one or more of the battery packs 100 and a vehicle body including an accommodation space accommodating the battery packs 100. For example, the vehicle 200 may be an electric vehicle 200, an electric scooter, an electric wheelchair, or an electric bike.

FIG. 10 is a partial front view schematically illustrating internal components of a vehicle according to an embodiment of the present disclosure.

Referring to FIGS. 9 and 10, the vehicle 200 according to an embodiment of the present disclosure may further include a vehicle body 210 configured to mount the battery pack 100 thereon. Also, a part of the vehicle body 210 may be configured to be inserted into the convex part 124 of the cooling unit 120. A part of the vehicle body 210 may have a convex shape in an upper direction. For example, as shown in FIG. 10, a convex part 210a in the upper direction corresponding to the convex part 124 provided in the cooling unit 120 may be formed in the vehicle body 210. The convex part 210a of the vehicle body 210 may be inserted into a recessed space formed in a lower portion of the convex part 124 of the cooling unit 120. Also, a concave part 210b in the lower direction corresponding to the concave part 125 of the cooling unit 120 may be formed in the vehicle body 210. The concave part 125 of the cooling unit 120 may be mounted on the concave part 210b of the vehicle body 210.

Accordingly, according to such a configuration of the present disclosure, the vehicle 200 of the present disclosure is configured such that a part of the body 210 is inserted into a recessed space formed by the convex part 124 of the cooling unit 120, thereby effectively increasing the space efficiency of an installation side of the battery pack 100. In particular, when the accommodation space of the battery pack 100 is narrow as in the vehicle 200, it is possible to minimize a dead space generated by the battery pack 100.

Meanwhile, although the terms indicating directions such as up, down, left, right, front, and back are used herein, these terms are only for convenience of description, and it is obvious to one of ordinary skill in the art that the terms may vary depending on the location of a target object or the location of an observer.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.
Preferred embodiments of the Invention are specified in the following items:
Item 1: A battery pack comprising:
   at least one battery module; and
   a cooling unit having a refrigerant passage configured to allow a refrigerant to flow therein, having a plate shape such that the at least one battery module is mounted thereon, and comprising at least one of a convex part in which a part on which the battery module is not mounted is convex in an upper direction, and a concave part in which another part on which the battery module is not mounted is concave in a lower direction.
Item 2: The battery pack of item 1, further comprising an electric module configured to control charging and discharging of the battery module,
   wherein the electric module is positioned to face at least one of the convex part and the concave part of the cooling unit, and comprises at least one curved surface.
Item 3: The battery pack of item 2, further comprising a heat transfer member having one side configured to be connected to the electric module and the other side in contact with the battery module, and having at least one curved surface to face at least one of the convex part and the concave part of the cooling unit.
Item 4: The battery pack of item 3,
   wherein the heat transfer member has an internal space configured to accommodate a cable electrically connecting the electric module and the battery module.
Item 5: The battery pack of item 3,
   wherein the battery module comprises a coupling portion extending from one side surface to an outer direction and having a first bolting hole formed therein, and
   wherein the heat transfer member comprises a support portion having a second bolting hole formed therein so as to be coupled to the coupling portion of the battery module.
Item 6: The battery pack of item 2, further comprising:
   a front plate coupled to a front end of the cooling unit;
   a rear plate coupled to a rear end of the cooling unit;
   a left plate coupled to a left end of the cooling unit; and
   a right plate coupled to a right end of the cooling unit.
Item 7: The battery pack of item 6, further comprising
   a pillar member having both ends extending from left to right of the electric module so as to support the left plate and the right plate, respectively, and having at least one curved surface to face at least one of the convex part and the concave part of the cooling unit.
Item 8: The battery pack of item 7, wherein the pillar member comprises:
   an accommodation portion positioned on the convex part of the cooling unit and recessed in an upper direction so that the convex part is inserted; and
   a protrusion portion positioned on the concave portion of the cooling unit and protruding in a lower direction so as to be inserted into a recessed space of the concave part.
Item 9: A vehicle comprising at least one battery pack according to any one of items 1 to 8.
Item 10:The vehicle of item 9, further comprising a vehicle body configured to mount the battery pack thereon,
   wherein a part of the vehicle body is configured to be inserted into a recessed space formed by the convex part of the cooling unit.

## Claims

1. A battery pack comprising:
at least one battery module; and
a cooling unit having a refrigerant passage configured to allow a refrigerant to flow therein, having a plate shape such that the at least one battery module is mounted thereon, and comprising at least one of a convex part in which a part on which the battery module is not mounted is convex in an upper direction, and a concave part in which another part on which the battery module is not mounted is concave in a lower direction,
wherein the cooling unit has a flat surface that extends in a horizontal direction and on which the battery module is mounted.

2. The battery pack of claim 1, further comprising an electric module configured to control charging and discharging of the battery module,
wherein the electric module is positioned to face at least one of the convex part and the concave part of the cooling unit, and comprises at least one curved surface.

3. The battery pack of claim 2, further comprising a heat transfer member having one side configured to be connected to the electric module and the other side in contact with the battery module, and having at least one curved surface to face at least one of the convex part and the concave part of the cooling unit.

4. The battery pack of claim 3,
wherein the heat transfer member has an internal space configured to accommodate a cable electrically connecting the electric module and the battery module.

5. The battery pack of claim 3,
wherein the battery module comprises a coupling portion extending from one side surface to an outer direction and having a first bolting hole formed therein, and
wherein the heat transfer member comprises a support portion having a second bolting hole formed therein so as to be coupled to the coupling portion of the battery module.

6. The battery pack of claim 2, further comprising:
a front plate coupled to a front end of the cooling unit;
a rear plate coupled to a rear end of the cooling unit;
a left plate coupled to a left end of the cooling unit; and
a right plate coupled to a right end of the cooling unit.

7. The battery pack of claim 6, further comprising
a pillar member having both ends extending from left to right of the electric module so as to support the left plate and the right plate, respectively, and having at least one curved surface to face at least one of the convex part and the concave part of the cooling unit.

8. The battery pack of claim 7, wherein the pillar member comprises:
an accommodation portion positioned on the convex part of the cooling unit and recessed in an upper direction so that the convex part is inserted; and
a protrusion portion positioned on the concave portion of the cooling unit and protruding in a lower direction so as to be inserted into a recessed space of the concave part.

9. A vehicle comprising at least one battery pack according to any one of claims 1 to 8.

10. The vehicle of claim 9, further comprising a vehicle body configured to mount the battery pack thereon,
wherein a part of the vehicle body is configured to be inserted into a recessed space formed by the convex part of the cooling unit.
